# EUROPÄISCHE PATENTSCHRIFT

(11) **EP 0 405 387 B1**
(45) Veröffentlichungstag und Bekanntmachung des Hinweises auf die Patenterteilung: **28.04.1993**
(21) Anmeldenummer: 90112019.6
(22) Anmeldetag: 25.06.1990
(51) Int. Cl.: C03B 9/193, C03B 11/06

(54) **Verfahren und Vorrichtung zum Pressen hohler Formlinge aus Glas**
Method and apparatus for pressing glass parisons
Procédé et dispositif pour presser des ébauches en verre creuses

(30) Priorität: 26.06.1989 DE 3920868
(43) Veröffentlichungstag der Anmeldung: 02.01.1991
(73) Patentinhaber: INTERNATIONAL PARTNERS IN GLASS RESEARCH, Windsor Connecticut 06095 (US)
(72) Erfinder: Trier, Wolfgang, Prof.-Dr., D-6370 Oberursel (DE)
(74) Vertreter: Goetz, Rupert, Dipl.-Ing.

(56) Entgegenhaltungen:
- US-A- 3 585 018
- US-A- 4 682 996

## Beschreibung

Die Erfindung betrifft ein Verfahren zum Pressen hohler Formlinge aus Glas zwischen einer Form, die eine zur Außenseite eines Formlings komplementäre Innenwand aufweist, und einem Plunger, der einen offenporigen Plungerkopf mit einer zur Innenseite des Formlings komplementären Oberfläche und einem inneren Hohlraum aufweist, welcher mit einer Flüssigkeit gefüllt ist, von der bei jedem Arbeitszyklus eine Teilmenge durch Wärmeübertragung vom Glas auf den Plungerkopf an dessen Oberfläche verdampft, zwischen dieser und dem Glas eine trennende Dampfschicht bildet und durch weitere in den Plungerkopf eingeleitete Flüssigkeit ersetzt wird.

Zum Herstellen leichtgewichtiger Glasbehälter hat sich das Preßblasverfahren durchgesetzt. Bei diesem Verfahren wird ein Külbel - im Gegensatz zum Blas-Glasverfahren - nicht durch Blasen sondern durch Pressen hergestellt. Das gepreßte Külbel wird anschließend in einer Fertigform ausgeblasen.

Nach diesem Verfahren werden seit Jahrzehnten Weitmundgläser, wie z.B. Marmeladengläser, hergestellt. Durch Verbesserung der Technologie gelingt es nach diesem Verfahren auch, Enghalsbehälter wie Flaschen herzustellen, die sich durch eine besonders gleichmäßige Wanddickenverteilung und geringes Gewicht auszeichnen. Schwierigkeiten bereitet dabei das Pressen des Külbels, wenn mit einem schlanken, kaum mehr als fingerdicken Plunger (Preßstempel) mit einem Flankenwinkel von beispielsweise nur 2° bis 3° gearbeitet werden muß.

Bei Verwendung massiver Plunger konnte bisher nur durch besonders genaue Beherrschung von deren Arbeitszeiten und Arbeitstemperaturen vermieden werden, daß das Glas bei seiner Abkühlung auf den Plunger aufschrumpft. Bei Verwendung massiver Plunger ist weiterhin nachteilig, daß durch hohe Scherbeanspruchungen im Glas während des Preßvorgangs und durch Gleitvorgänge zwischen Glas und Oberfläche des Plungers eine Verletzung der Glasoberfläche und ein Metallabrieb vom Plunger nicht ganz verhindert werden kann. Verletzungen der Glasoberfläche und in das Glas sich einbettende kleine Metallteilchen setzen die Gebrauchsfestigkeit des Glasbehälters, besonders dessen Schlagfestigkeit, herab.

Um diese Nachteile zu vermeiden, ist in der US Patentschrift 4,682,996 ein Verfahren der eingangs beschriebenen Art und eine Vorrichtung zum Durchführen dieses Verfahrens vorgeschlagen worden. Dabei soll die sich zwischen Glas und Oberfläche des Plungers bildende dünne Dampfschicht als Schmierfilm wirken, der das Gleiten zwischen Glas und Plunger erleichtert und somit auch den Metallabrieb vom Plunger vermeidet und den Wärmeübergang zwischen Glas und Plunger reduziert. Dieses Ziel konnte jedoch bisher vor allem bei schlanken Plungern, wie sie zum Herstellen von Enghalsbehältern erforderlich sind, nicht mit ausreichender Sicherheit erreicht werden.

Der Erfindung liegt deshalb die Aufgabe zugrunde, ein Verfahren der eingangs beschriebenen Art und eine zu dessen Durchführung geeignete Vorrichtung derart weiterzubilden, daß eine Berührung zwischen Glas und Oberfläche des Plungers und ein anschließendes Aufschrumpfen des Külbels auf den Plunger mit noch größerer Sicherheit vermieden wird, auch wenn der Plunger besonders schlank ist und einen Flankenwinkel in der Größenordnung von nur 1° aufweist.

Die Aufgabe ist, soweit sie das Verfahren betrifft, erfindungsgemäß dadurch gelöst, daß der Flüssigkeitsdruck im Hohlraum des Plungerkopfes dem beim Pressen im Glas herrschenden Preßdruck jeweils solange angepaßt wird, bis das Glas seine zum Zurückziehen des Plungerkopfes erforderliche Formstabilität erreicht hat, so daß ausgeschlossen wird, daß durch den Preßdruck Flüssigkeit in den Poren des Plungerkopfes in dessen Hohlraum zurückgedrängt wird.

Der Erfindung liegt die Erkenntnis zugrunde, daß es nicht genügt, den Druck im Hohlraum des Plungerkopfes konstant zu halten, indem man ihn beispielsweise an eine Wasserleitung anschließt. Ein konstanter Druck im Plungerkopf läßt sich zwar auf jeden Fall so bemessen, daß durch die Poren genügend Flüssigkeit austritt, um zwischen dem Glas und der Oberfläche des Plungerkopfes eine Dampfschicht zu bilden. Es ist aber nicht in allen Fällen möglich, mit einem konstanten Druck einerseits einen übermäßigen Flüssigkeitsverbrauch durch vom Plunger abtropfende Flüssigkeit zu vermeiden und andererseits auszuschließen, daß durch den Preßdruck Flüssigkeit aus den Poren des Plungerkopfes in dessen Hohlraum zurückgedrängt wird und dadurch die Entstehung einer an der gesamten Oberfläche des Plungerkopfes geschlossenen Dampfschicht verhindert oder eine solche Dampfschicht während des Pressens stellenweise wieder zerstört wird.

Diese Schwierigkeiten werden durch die erfindungsgemäße Anpassung des Flüssigkeitsdruckes an den Preßdruck vermieden. Es bildet sich eine weitgehend gleichmäßige Dampfschicht, die das entstehende Külbel vom Plungerkopf trennt, wodurch der Wärmeübergang zwischen Glas und Plungerkopf vermindert und die Scherbeanspruchung im Glas herabgesetzt, Abrieb des Plungerkopfes verhindert und ein Aufschrumpfen des Külbels auf den Plungerkopf ausgeschlossen wird.

Vorzugsweise wird der Flüssigkeitsdruck im Hohlraum des Plungerkopfes während des Pressens auf einen Betrag gesteigert, der 90% bis 110% des größten Preßdruckes im Glas beträgt. Dadurch werden hydrodynamische Druckverluste in den Poren des Plungerkopfes in der Weise ausgeglichen, daß das angestrebte Gleichgewicht zwischen dem Flüssigkeitsdruck und dem Preßdruck an oder in der Nähe der Oberfläche des Plungerkopfes erreicht wird.

Bei einer zweckmäßigen Durchführungsweise des erfindungsgemäßen Verfahrens wird der Flüssigkeitsdruck im Hohlraum des Plungerkopfes während eines ersten Zeitintervalls gesteigert, das kurz vor dem Eintauchen des Plungerkopfes in die Form beginnt und kurz nach Beginn des Pressens endet. Durch zweckmäßige Begrenzung dieses Zeitintervalls läßt sich der Flüssigkeitsverbrauch minimieren. Das Ende des Zeitintervalls läßt sich so festlegen, daß am Ende des Preßvorgangs, wenn der Plungerkopf aus der Form herausbewegt wird, noch genügend Dampfdruck zur Verfügung steht, um zu verhindern, daß in das frisch gepreßte Külbel Umgebungsluft hineingesaugt wird, die verschmutzt sein kann. Auf diese Weise wird zusätzlich dafür gesorgt, daß das Külbel von Verunreinigungen freibleibt.

Es ist ferner vorteilhaft, wenn der Flüssigkeitsdruck im Hohlraum des Plungerkopfes erneut während eines zweiten Zeitintervalls gesteigert wird, das sich an das Zurückziehen des Plungerkopfes aus der Form anschließt. Auf diese Weise läßt sich die Flüssigkeit dazu verwenden, Glasteilchen oder Fremdkörper, die sich an der Oberfläche des Plungerkopfes angelagert haben könnten, abzulösen. Teile der Flüssigkeit verdampfen in den Poren des nach einem Preßvorgang noch heißen Plungerkopfes und schleudern weiter außen haftende Flüssigkeitströpfchen weg, wodurch die Oberfläche des Plungerkopfes gründlich gereinigt wird. Die Flüssigkeitsmenge, die während des zweiten Zeitintervalls durch die Poren des Plungerkopfes an dessen Oberfläche gelangt, läßt sich so dosieren, daß der Plungerkopf ausreichend gekühlt wird, wodurch eine weitere Kühlung des Plungerkopfes entbehrlich sein oder zumindest reduziert werden kann.

Vorzugsweise wird der Flüssigkeitsdruck jeweils durch Einleiten zusätzlicher Flüssigkeit in den Hohlraum des Plungerkopfes gesteigert. Es ist aber auch möglich, zeitlich begrenzte Drucksteigerungen im Hohlraum dadurch zu bewirken, daß dessen Volumen vorübergehend verkleinert wird, beispielsweise durch einen periodisch in ihn eindringenden Kolben. Die verbrauchte Flüssigkeitsmenge muß dann jeweils in Phasen ergänzt werden, in denen der Kolben od.dgl. in eine Ruhestellung zurückkehrt.

Eine zum Durchführen des erfindungsgemäßen Verfahrens geeignete Vorrichtung hat, wie aus der US-Patentschrift 4,682,996 bekannt, einen Plunger, der einen offenporigen, hohlen Plungerkopf aufweist, und eine Leitung zum Einleiten von Flüssigkeit in den Plungerkopf. Erfindungsgemäß ist diese Vorrichtung dadurch weitergebildet, daß die Leitung ein Absperrorgan enthält, das an die Bewegungen des Plungers angepaßt periodisch betätigbar ist.

Das Absperrorgan kann beispielsweise ein Rückschlagventil sein, das den Hohlraum im Plungerkopf selbsttätig immer dann von einer Flüssigkeitsquelle - beispielsweise einer gewöhnlichen Wasserleitung - trennt, wenn der Preßdruck infolge der Porosität des Plungerkopfes einen Druck in dessen Innenraum erzeugt, der höher als der Druck der Flüssigkeitsquelle ist. Als periodisch betätigbares Absperrorgan kann aber auch ein Kolben vorgesehen sein, der von einer gesonderten Energiequelle gesteuert ist und zugleich die Aufgabe hat, das Volumen des Hohlraums des Plungerkopfes periodisch zu vermindern, um auf diese Weise den Flüssigkeitsdruck im Hohlraum dem beim Pressen im Glas herrschenden Preßdruck anzupassen.

In jedem Fall ist es zweckmäßig, wenn das Absperrorgan mit dem Plunger fest verbunden und zusammen mit ihm hin- und herbewegbar ist. Auf diese Weise wird eine flexible Verbindungsleitung zwischen Absperrorgan und Plunger vermieden, deren Elastizität den erwünschten Druckaufbau im Hohlraum des Plungers beeinträchtigen könnte.

Es ist ferner vorteilhaft, wenn an das Absperrorgan ein hohler Einsatzkörper angeschlossen ist, der sich in den Hohlraum des Plungerkopfes hineinerstreckt, mindestens eine Austrittsöffnung aufweist und zwischen sich und der Innenwand des Plungerkopfes einen durch die Austrittsöffnung(en) mit der Flüssigkeit gefüllten Ringraum freiläßt. Vorzugsweise ist die in radialer Richtung gemessene Breite des Ringraums kleiner als die Wanddicke des Plungerkopfes.

Der Einsatzkörper steuert die Strömung und Verteilung der Flüssigkeit entlang der inneren Oberfläche des hohlen Plungerkopfes. Je nach der Gestaltung des Plungerkopfes und seiner Lage im Raum - nach oben oder nach unten weisend - wird der Einsatzkörper mit einer oder mehreren Austrittsöffnungen versehen, deren Anordnung derart gewählt wird, daß die Oberfläche des Plungerkopfes beim Eintauchen in die Form jeweils einen gleichmäßigen Flüssigkeitsfilm aufweist.

Das Absperrorgan kann ein Rückschlagventil sein. In diesem Fall wird der Druckaufbau im Hohlraum des Plungerkopfes unmittelbar vom Preßdruck bestimmt.

Ein Ausführungsbeispiel der Erfindung wird im folgenden anhand schematischer Zeichnungen mit weiteren Einzelheiten erläutert. Es zeigen:
- Fig. 1: ein Schaltschema einer Anlage zum Herstellen hohler Formlinge aus Glas mit einer erfindungsgemäßen Vorrichtung,
- Fig. 2: einen Plunger einer erfindungsgemäßen Vorrichtung, der teilweise in einer axialen Ebene aufgeschnitten ist, und
- Fig. 3: ein Diagramm des zeitlichen Verlaufs von Plungerbewegungen und anderen Vorgängen beim Pressen.

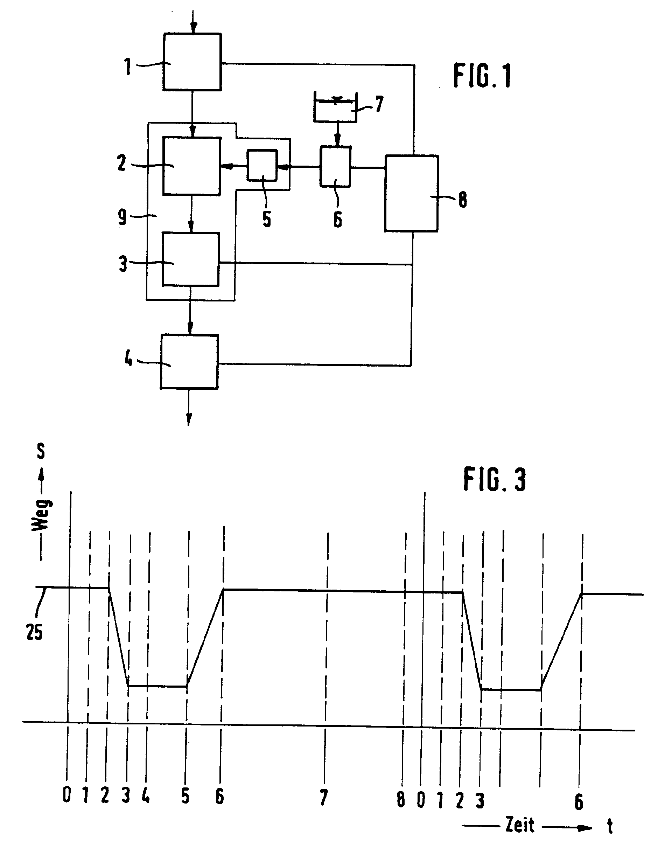

Zu der in Fig. 1 dargestellten Anlage gehört ein Speiser 1, der bei jedem Arbeitszyklus einen Posten geschmolzenen Glases an eine Vorformstation mit Preßeinheit 2 abgibt. In der Preßeinheit 2 werden Külbel gepreßt. An die Vorformstation schließt sich eine Fertigformstation 3 an, in der die Külbel durch Blasen ihre endgültige Form erhalten. Von dort gelangen die Külbel auf einen Förderer 4, von dem sie abtransportiert werden.

Der Preßeinheit 2 wird über einen Kühler mit Temperaturregler 5 eine zum Kühlen und Herstellen einer trennenden Dampfschicht geeignete Flüssigkeit, beispielsweise Wasser mit einer Temperatur von 10° bis 20°C zugeführt, die von eine Dosierpumpe 6 aus einem Behälter 7 gefördert wird. Sämtliche Funktionen der Anlage werden von einer Steuereinheit 8 überwacht und gesteuert.

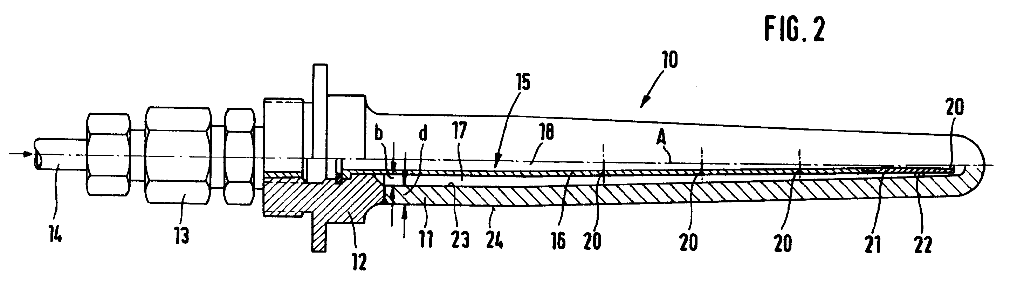

Zur Preßvorrichtung 2 gehört gemäß Fig. 2 ein Plunger 10 mit einem Plungerkopf 11 aus offenporigem Werkstoff, beispielsweise Sintermetall mit einer Porosität zwischen 10% und 30%, vorzugsweise 25%, bezogen auf das Volumen des Plungerkopfes. Der Plungerkopf 11 ist an einem Tragkörper 12 befestigt, vorzugsweise angeschweißt. In den Tragkörper 12 ist ein Absperrorgan 13 eingeschraubt, das im dargestellten Beispiel von einem handelsüblichen Rückschlagventil gebildet und durch eine Leitung 14 über den Kühler mit Temperaturregler 5 und die Dosierpumpe 6 an den Behälter 7 angeschlossen ist.

Der Plungerkopf 11 hat einen Hohlraum 15, der einen rohrförmigen Einsatzkörper 16 enthält. Der Einsatzkörper 16 besteht beispielsweise aus nicht rostendem Stahl und ist am Tragkörper 12 derart befestigt, daß er sich gleichachsig mit dem Plungerkopf 11 erstreckt; beide haben also eine gemeinsame geometrische Achse A. Auf diese Weise ist der Hohlraum 15 des Plungerkopfes 11 unterteilt in einen Ringraum 17 zwischen der Innenwand des Plungerkopfes 11 und dem Einsatzkörper 16 sowie einen Innenraum 18 innerhalb des Einsatzkörpers 16.

Der Innenraum 18 ist über das Absperrorgan 13 an die Leitung 14 angeschlossen und durch mindestens eine Austrittsöffnung 20 von verhältnismäßig kleinem Durchmesser mit dem Ringraum 17 verbunden. Anzahl und Anordnung der Austrittsöffnungen 20 hängen von der Länge des Plungerkopfes 11 und von dessen Lage im Raum ab. Wenn der Plungerkopf 11 beispielsweise eine senkrecht nach oben gerichtete Arbeitsstellung einnimmt, ist es zweckmäßig, wenn der Einsatzkörper 16 nur an seinem freien oberen Ende eine Austrittsöffnung 20 aufweist. Die durch die Leitung 14 über das Absperrorgan 13 in den Innenraum 18 eingeleitete Flüssigkeit wird dann von dieser Austrittsöffnung 20 in Form eines scharfen Strahls senkrecht nach oben gegen die Innenwand des Plungerkopfes 11 gespritzt und verteilt sich von dort im Ringraum 17. Um den Querschnitt dieses Strahls bei Bedarf ändern zu können, ist bei dem in Fig. 2 dargestellten Ausführungsbeispiel in das Ende des Einsatzkörpers 16 eine auswechselbare Düse 21 eingeschraubt. Die Düse 21 weist über ihre äußere Mantelfläche verteilt mehrere radiale Zapfen 22 auf, die dafür sorgen, daß ein vorgegebener Abstand zur Innenwand des Plungerkopfes 11 eingehalten wird.

Die Innenwand 23 des Plungerkopfes 11 ist in der Nähe des Tragkörpers 12 zylindrisch und wird mit zunehmender Entfernung von diesem schlanker, so daß sie allmählich mit dem Einsatzkörper 16 konvergiert, ohne diesen je unmittelbar zu berühren. Die äußere Oberfläche 24 des Plungerkopfes 11 ist der Innenwand 23 geometrisch ähnlich. Die in radialer Richtung gemessene Breite b des Ringraumes 17 ist überall erheblich kleiner als die Wanddicke d des Plungerkopfes 11.

Das Diagramm in Fig. 3 enthält eine abgestufte Linie 25, die den Weg s des Plungers 10 über der Zeit t darstellt. Als senkrechte Linien sind in das Diagramm bestimmte Zeitpunkte t₀ bis t₈ eingetragen, an denen folgendes geschieht:
- t₀: Tropfenfall; ein Posten Glas gelangt in eine nicht dargestellte Form.
- t₁: Die Dosierpumpe 6 beginnt, eine vorgegebene Wassermenge durch das Absperrorgan 13 in den Innenraum 18 des Einsatzkörpers 16 zu fördern.
- t₂: Der Plungerkopf 11 taucht in das Glas ein.
- t₃: Der Plungerkopf 11 kommt zum Stillstand; die Berührung seiner Oberfläche 24 mit dem Glas hat ihr Maximum erreicht.
- t₄: Die Dosierpumpe 6 wird abgeschaltet.
- t₅: Der Plunger 10 wird zurückgezogen.
- t₆: Der Plungerkopf 11 ist vollständig aus dem entstandenen Külbel herausgefahren.
- t₇: Die Dosierpumpe 6 wird erneut eingeschaltet.
- t₈: Die Dosierpumpe 6 wird abgeschaltet.
- t₀: Ein neuer Arbeitszyklus beginnt.

Die gesamte Wassermenge je Arbeitszyklus, die dem Plungerkopf 11 in der beschriebenen Weise zugeführt wird, hat beispielsweise die Größenordnung von 6 cm³ bis 12 cm³, wenn es sich um einen Plungerkopf handelt, mit dem Külbel zum Herstellen von Bierflaschen von 0,33 l Inhalt gepreßt werden. Die Temperatur des zugeführten Wassers beträgt vorzugsweise 15°C.

## Patentansprüche

1. Verfahren zum Pressen hohler Formlinge aus Glas zwischen einer Form, die eine zur Außenseite eines Formlings komplementäre Innenwand aufweist, und einem Plunger (10), der einen offenporigen Plungerkopf (11) mit einer zur Innenseite des Formlings komplementären Oberfläche (24) und einen inneren Hohlraum (15) aufweist, welcher mit einer Flüssigkeit gefüllt ist, von der bei jedem Arbeitszyklus eine Teilmenge durch Wärmeübertragung vom Glas auf den Plungerkopf (11) an dessen Oberfläche (24) verdampft, zwischen dieser und dem Glas eine trennende Dampfschicht bildet und durch weitere in den Plungerkopf (11) eingeleitete Flüssigkeit ersetzt wird,
dadurch **gekennzeichnet**, daß der Flüssigkeitsdruck im Hohlraum (15) des Plungerkopfes (11) dem beim Pressen im Glas herrschenden Preßdruck jeweils solange angepaßt wird, bis das Glas seine zum Zurückziehen des Plungerkopfes (11) erforderliche Formstabilität erreicht hat, so daß ausgeschlossen wird, daß durch den Preßdruck Flüssigkeit in den Poren des Plungerkopfes (11) in dessen Hohlraum (15) zurückgedrängt wird.

2. Verfahren nach Anspruch 1,
dadurch **gekennzeichnet**, daß Flüssigkeitsdruck im Hohlraum (15) des Plungerkopfes (11) während des Pressens auf einen Betrag gesteigert wird, der 90% bis 110% des größten Preßdruckes im Glas beträgt.

3. Verfahren nach Anspruch 1 oder 2,
dadurch **gekennzeichnet,** daß der Flüssigkeitsdruck im Hohlraum (15) des Plungerkopfes (11) während eines ersten Zeitintervalls (t₁-t₄) gesteigert wird, das kurz vor dem Eintauchen des Plungerkopfes (11) in die Form beginnt und kurz nach Beginn des Pressens endet.

4. Verfahren nach Anspruch 3,
dadurch **gekennzeichnet,** daß der Flüssigkeitsdruck im Hohlraum des Plungerkopfes (11) erneut während eines zweiten Zeitintervalls (t₇-t₈) gesteigert wird, das sich an das Zurückziehen des Plungerkopfes (11) aus der Form anschließt.

5. Verfahren nach einem der Ansprüche 1 bis 3,
dadurch **gekennzeichnet,** daß der Flüssigkeitsdruck jeweils durch Einleiten zusätzlicher Flüssigkeit in den Hohlraum (15) des Plungerkopfes (11) gesteigert wird.

6. Vorrichtung zum Durchführen des Verfahrens nach einem der Ansprüche 1 bis 5 mit einem Plunger (10), der einen offenporigen, hohlen Plungerkopf (11) aufweist, und mit einer Leitung (14) zum Einleiten von Flüssigkeit in den Plungerkopf (11),
dadurch **gekennzeichnet,** daß die Leitung (14) ein Absperrorgan (13) enthält, das an die Bewegungen des Plungers (10) angepaßt periodisch betätigbar ist.

7. Vorrichtung nach Anspruch 6,
dadurch **gekennzeichnet,** daß das Absperrorgan (13) mit dem Plunger (10) fest verbunden und zusammen mit ihm hin- und herbewegbar ist.

8. Vorrichtung nach Anspruch 7,
dadurch **gekennzeichnet,** daß an das Absperrorgan (13) ein hohler Einsatzkörper (16) angeschlossen ist, der sich in den Hohlraum (15) des Plungerkopfes (11) hineinerstreckt, mindestens eine Austrittsöffnung (20) aufweist und zwischen sich und der Innenwand (23) des Plungerkopfes (11) einen durch die Austrittsöffnung(en) (20) mit der Flüssigkeit füllbaren Ringraum (17) freiläßt.

9. Vorrichtung nach Anspruch 8,
dadurch **gekennzeichnet,** daß die in radialer Richtung gemessene Breite (b) des Ringraumes (17) kleiner als die Wanddicke (d) des Plungerkopfes (11) ist.

10. Vorrichtung nach einem der Ansprüche 6 bis 9,
dadurch **gekennzeichnet,** daß das Absperrorgan (13) ein Rückschlagventil ist.

## Claims

1. Method for compression moulding hollow formed articles from glass between a mould comprising an inner wall which is complementary to the exterior of a formed article, and a plunger (10) including an open-pore plunger head (11) having a surface (24) which is complementary to the interior of the formed article and an inner cavity (15) which is filled with a liquid of which a fraction is evaporating in each working cycle on the surface (24) of the plunger head (11) by heat transfer from the glass to the plunger head (11), is forming a separating steam layer between said surface and the glass and is replaced by additional liquid directed into the plunger head (11),
**characterized** in that the pressure of the liquid within the cavity (15) of the plunger head (11) is in each case varied in order to match it with the compression moulding pressure prevailing in the glass during moulding until the glass has reached the necessary dimensional stability for the withdrawal of the plunger head (11), so as to exclude that liquid existing within the pores of the plunger head (11) is forced back by the compression moulding pressure into the cavity (15) of the plunger head (11).

2. The method according to claim 1,
**characterized** in that the pressure of the liquid within the cavity (15) of the plunger head (11) is increased during compression moulding to an amount within 90% to 110% of the maximum compression moulding pressure in the glass.

3. The method according to claim 1 or 2,
**characterized** in that the pressure of the liquid within the cavity (15) of the plunger head (11) is increased during a first time interval (t₁ to t₄) which starts shortly before the plunger head (11) enters the mould and ends shortly after the compression moulding starts.

4. The method according to claim 3,
**characterized** in that the pressure of the liquid in the cavity of the plunger head (11) is newly increased during a second time interval (t₇ to t₈) which succeeds the withdrawal of the plunger head (11) from the mould.

5. The method according to any of claims 1 to 3,
**characterized** in that the pressure of the liquid is in each case caused to increase through the feeding of additional liquid into the cavity (15) of the plunger head (11).

6. Apparatus for carrying out the method according to any of claims 1 to 5, said apparatus having a plunger (10) comprising an open-pore, hollow plunger head (11), and a conduit (14) for feeding liquid into the plunger head (11),
**characterized** in that the conduit (14) contains a shut-off member (13) which is capable of being actuated periodically in synchronism with the movements of the plunger (10).

7. The apparatus according to claim 6,
**characterized** in that the shut-off member (13) is integral with the plunger (10) and is capable of being reciprocated along with the latter.

8. The apparatus according to claim 7,
**characterized** in that a hollow insert (16) is connected to the shut-off member (13), said insert extending into the cavity (15) of the plunger head (11), including at least one outlet aperture (20), and leaving between itself and the inner wall (23) of the plunger head (11) an annular space (17) which can be filled up with the liquid through the outlet aperture(s) (20).

9. The apparatus according to claim 8,
**characterized** in that the width (b), measured in radial direction, of the annular space (17) is less than the wall thickness (d) of the plunger head (11).

10. The apparatus according to any of claims 6 to 9,
**characterized** in that the shut-off member (13) is a check valve.

## Revendications

1. Procédé de moulage par compression d'objets moulés creux en verre entre un moule ayant une paroi intérieure complémentaire de l'extérieur d'un objet moulé, et un piston (10) muni d'une tête de piston (11) à pores ouvertes, comprenant une surface (24) qui est complémentaire du côté intérieur de l'objet moulé, et une cavité intérieure (15) qui est remplie d'un liquide dont une fraction s'évapore à chaque cycle de travail sur la surface (24) de la tête de piston (11) grâce au transfert de chaleur du verre à la tête de piston (11), forme une couche de vapeur de séparation entre la surface (24) et le verre, et est remplacée par un supplément de liquide introduit dans la tête de piston (11),
**caractérisé** en ce que la pression du liquide dans la cavité (15) de la tête de piston (11) est variée pour l'adapter à la pression de moulage régnant dans le verre pendant le moulage par compression, et ce jusqu'à ce que le verre ait atteint la stabilité dimensionnelle nécessaire pour le retrait de la tête de piston (11), de manière à exclure que le liquide qui se trouve dans les pores de la tête de piston (11) est refoulé par la pression de moulage vers la cavité (15) de la tête de piston (11).

2. Procédé selon la revendication 1,
**caractérisé** en ce que la pression du liquide dans la cavité (15) de la tête de piston (11) est augmentée au cours du moulage par compression jusqu'à concurrence d'un montant compris entre 90% et 110% de la pression de moulage maximale dans le verre.

3. Procédé selon la revendication 1 ou 2,
**caractérisé** en ce que la pression du liquide dans la cavité (15) de la tête de piston (11) est augmentée pendant un premier intervalle de temps (t₁ à t₄) qui commence à compter peu de temps avant la plongée de la tête de piston (11) dans le moule et se termine peu de temps après le début du moulage par compression.

4. Procédé selon la revendication 3,
**caractérisé** en ce que la pression du liquide dans la cavité de la tête de piston (11) est de nouveau augmentée pendant un second intervalle de temps (t₇ à t₈) qui succède au retrait de la tête de piston (11) du moule.

5. Procédé selon l'une des revendications 1 à 3,
**caractérisé** en ce que la pression du liquide est augmentée dans chacun des cas par l'introduction d'un supplément de liquide dans la cavité (15) de la tête de piston (11).

6. Dispositif destiné à la mise en oeuvre du procédé selon l'une des revendications 1 à 5, ledit dispositif comprenant un piston (10), muni d'une tête de piston (11), creuse, à pores ouvertes, et une conduite (14) destinée à introduire du liquide dans la tête de piston (11),
**caractérisé** en ce que la conduite (14) contient un organe d'arrêt (13) susceptible d'être actionné périodiquement en synchronisme avec les mouvements du piston (10).

7. Dispositif selon la revendication 6,
**caractérisé** en ce que l'organe d'arrêt (13) fait partie intégrante du piston (10) et est capable d'être déplacé en va-et-vient ensemble avec lui.

8. Dispositif selon la revendication 7,
**caractérisé** en ce qu'une pièce rapportée creuse (16) est raccordée à l'organe d'arrêt (13) et qui s'étend dans la cavité (15) de la tête de piston (11), est munie d'au moins une ouverture de sortie (20) et laisse ouvert entre elle-même et la paroi interne (23) de la tête de piston (11) un espace annulaire (17) capable d'être rempli avec du liquide par l'intermédiaire de l'une/des ouvertures de sortie (20).

9. Dispositif selon la revendication 8,
**caractérisé** en ce que la largeur (b), mesurée dans la direction radiale, de l'espace annulaire (17) est inférieure à l'épaisseur de paroi (d) de la tête de piston (11).

10. Dispositif selon l'une des revendications 6 à 9,
**caractérisé** en ce que l'organe d'arrêt (13) est une soupape de non-retour.
